# EUROPEAN PATENT APPLICATION

(11) **EP 2 120 416 A1**
(43) Date of publication of application: **18.11.2009**
(21) Application number: 08156401.5
(22) Date of filing: 16.05.2008
(51) Int. Cl.: H04L 29/06

(54) **Apparatus, method and system for improved quality of voice calls over a packet based network**

(71) Applicant: Deutsche Telekom AG, 53113 Bonn (DE); Technische Universität Berlin, 10623 Berlin (DE)
(72) Inventor: Möller, Sebastian, 10405 Berlin (DE); Vidales, Pablo, 10437 Berlin (DE); Lewcio, Blazej, 13353 Berlin (DE); Wältermann, Marcel, 10439 Berlin (DE)
(74) Representative: Vossius & Partner

(57) **Abstract**

The invention relates to an apparatus and a method for providing data communication over a packet based network comprising a network interface (450) which is connectable to the packet based network. The apparatus comprises at least two codec means (430, 470) being arranged in parallel and being connected to said network interface (450). A first codec means (470) comprises a first buffer (460) and a second codec means (430) comprises a second buffer (440). A management unit (420) is connected to both codec means (430, 470) and a sound device (410). When a changeover signal is issued, said first codec means (470) continuous to decode an input data packet being passed through by said first buffer (460), and said second codec means (430) initiates an encoding process of an output data packet being received from the sound device (410) and directly transmits the encoded output data packet to the network interface (450).

## Description

### FIELD OF THE INVENTION

The present invention relates to an apparatus, a method and a system providing improved quality of data communication over a packet based network, in particular to an apparatus, a method and a system for improved quality of voice calls that are realised using the Internet Protocol.

### BACKGROUND OF THE INVENTION

Current packet based networks are capable of offering voice services using the Internet Protocol, hereinafter referred as IP protocol or as IP. However, voice services are subjected to audible impairments caused by changes in the underlying data packet communication network such as the Internet. The impact of these impairments on the overall quality of the voice call can be such that different compression algorithms and the corresponding voice codecs are used.

A popularity of IP-based voice transmission and the convergence of packet-based network technologies enable a user to utilise voice services independently from the technology available. Mobile terminals are equipped with voice processing features that allow users to make voice a call using packet based networks. An important part of voice processing is the voice compression algorithms embedded in the codecs. To maintain the expected quality during a voice call, these codecs may be changed to deal with unexpected network changes or to overcome codec availability restrictions in some networks, as not all codecs are available across all packet-based network technologies.

An IP-based voice processing system comprises a modular structure, enabling the replacement of independent components during a voice call. One of the main components of the voice processing system is the speech coder-decoder, hereinafter referred as a codec. There is a wide variety of codecs available; each codec performs better than others in certain network conditions, e.g., in terms of packet loss, available throughput, network jitter, etc. Moreover, the codecs provide different compression methods considering these parameters.

A method and system for Wireless IP Telephony is described in US-2007/0195749 which relates to a wireless IP telephone that connects to a communication network and measures network conditions, with a strong focus on packet loss as the most decisive network parameter to adapt the speech codec. The wireless IP phone measures the packet loss in the network to which it is connected and it adapts the speech codec accordingly. For example, when packet losses increase, then the wireless IP phone lowers the bit rate requirements for the codec being used to process the active voice call. Thus, US-2007/0195749 considers mainly packet loss as the decisive parameter to adjust the codec.

A method for change of codec during an active call is described in US-B1-7 307 980 in which a router device connects at least two telephone devices for transferring voice information over a packet based network. The router performs coding and encoding related tasks, and monitors the transmission medium characteristics to change codec and decoder accordingly.

US-A-2007/0104185 relates to a voice over IP device, hereinafter referred as VoIP device that is capable of voice over IP codec adjustment. The device may switch WAN line or codec according to packet loss conditions in the WAN network. A VoIP telephone is configured to monitor packet loss as the exclusive decision parameter, whereas the codec control unit may also be included in other network components, i.e., "gate keeper".

A method and apparatus for dynamically allocating bandwidth utilization in a packet telephony system is described in US-B2-7 020 263, wherein a network monitoring agent according to the network conditions notifies the voice call participants, i.e., receiver and transmitter of the selection of a new codec. Also according to the measured network conditions, for example traffic load, the agent mentioned informs the receiver and the transmitter of the moment when such selection should take place. The network monitoring agent can select an encoding standard based on, e.g., current network traffic volume, network error characteristics, and time of day or day of week.

A method and system for changing the quality of service for voice over IP calls is presented in US-B1-6 735 175, which explains a solution for changing quality of voice over IP calls based on a media gateway residing between a PSTN telephone and a VoIP network. The media gateway is capable of codec switching when requested by the user.

A method and apparatus for changing codecs to reproduce video and/or audio data streams are presented in EP-A2-1 827 030 which enables to maintain media stream continuity during codec changes.

A method for voice communication providing a soft codec changeover with a shared media transport is published in a paper, Mobisense testbed: Merging user Perception and Network, P. Vidales et al., Tridentcom 2008, March 18-20, 2008, Innsbruck, Austria.

### SUMMARY OF THE INVENTION

The object of the present invention is to provide an apparatus, a method and a system for improving the quality of data communication over a packet based network, in order to overcome the limitations of technology and prior art.

The object is achieved by the features of the independent claims of the present invention.

According to an aspect, the present invention provides an apparatus for providing data communication over a packet based network comprising a network interface being connectable to the packet based network, at least two codec means being arranged in parallel and being connected to the network interface, wherein a first codec means comprises a first buffer and a second codec means comprises a second buffer, a management unit being connected to said codec means and a sound device. If a changeover signal is issued, said first codec means may continue to decode an input data packet being passed through by said first buffer while at the same time the second codec means may initiate an encoding process of an output data packet being received from the sound device and may directly transmit the encoded output data packet to the network interface.

According to another aspect of the invention, during a codec changeover said first codec means may continue to decode said input data packet until receipt of a buffers status signal when the first buffer is empty.

According to another aspect of the invention, the network interface comprises a type detection means which may detect the type of the input data packet and which may forward the input data packet to one of the said codec means suitable for processing said type of the input data packet, in accordance with the used encoding method for data packet.

According to another aspect of the invention, the network interface may also comprise an integrity detection means for detecting integrity of said input data packet by determining a packet number of said input data packet. Said packet number has a predetermined distance from the packet number of a previous input data packet, said input data packet may be rejected.

According to another aspect of the invention, each of the codec means is capable to encode/decode a predetermined encoding/decoding scheme which is different from the predetermined encoding/decoding scheme of the other codec means.

According to another aspect of the invention, the input/output data packet may be a voice encoded according to a predetermined encoding scheme. The said voice packet may be an encoded data packet being transmitted over the packet based network and contains certain sound information after decoding. Alone or together with other decoded sound information it may reproduce a voice with certain length using the sound device.

According to another aspect of the invention, the subject of the present invention is a method for processing data in a packet based network. The method may comprise the steps of receiving and transmitting an input/output data packet via a network interface, providing the received data to at least two codec means, wherein the first codec means comprises a first buffer and the second codec means comprises a second buffer, forwarding/receiving data from the codec means to a management unit being connected to a sound device. When a codec changeover signal is issued, said first codec means may continue to decode the input data packet being passed through by said first buffer via at the same time said second codec means may initiate an encoding process of an output data packet being received from the sound device and directly transmits the encoded output data packet to the network interface.

According to another aspect of the invention, said management unit may send the changeover signal between a receiver and a transmitter to initiate the codec changeover in the presence of at least one of the following situations when a terminal changes networks, codec not available in the packet based network, actual codec cannot cope with changes in the network conditions.

According to another aspect of the invention, the subject of the present invention is a method for negotiating data communication over a packet based network. Said negotiation procedure may be started by initiating a session initiation protocol handshake by the first apparatus requesting codec changeover and then providing a new codec by sending session initiation protocol message from said first apparatus and followed by confirming the selection of said first codec if said codec is supported by a second apparatus and finally finished with the step of completing said session initiation protocol handshake with acknowledgement.

According to another aspect of the invention, said negotiation procedure is complied with RFC standard in a framework preferably based on session initiation protocol, SIP and session description protocol, SDP.

According to another aspect of the invention, the above mentioned negotiation procedure may be used in a method for determining data bandwidth fluctuation bringing a data process in the packet based network. An initial step of determining may be the above-mentioned negotiation procedure, and followed by establishing a parallelism of media stream and finally the package of real-time transport protocol, RTP may be filtered.

According to another aspect of the invention, the subject of the present invention is a system for negotiating data communication over a packet based network comprising a first apparatus being connected to said packet based network and a second apparatus being connected to said packet based network, wherein the first apparatus requesting a codec changeover initiates a session initiation protocol handshake and provides a new codec by sending session initiation protocol message; wherein the second apparatus confirms the selection of said new codec if it is supported by the second apparatus; and wherein the first apparatus completes said session initiation protocol handshake with an acknowledgment. Said first and second apparatus is preferably an apparatus as described above.

The apparatus, method and system is capable to adapt to current network requirements during an active voice call over packet based network, which may enable to apply diverse speech compression algorithms and to switch between them during ongoing voice transmission, and in which included codec changeover algorithm may reduce audible play-out artefacts that can arise out of codec changeover process itself. In this way, the invention may be universally used in a packet based network with varying parameters and may simultaneously reduce perceptual effects of the apparatus adaptation.

There may be a need to change a compression algorithm utilised in the middle of a voice call and causing minimal disruption to the call quality. The need to switch voice codecs during the lapse of a voice call can be the resulting event of at least the following reasons:
a) After sudden drastic changes in any network condition such as available throughput, jitter, delay, or packet loss.
b) After one of the networking end terminals that have the roles of a receiver or a transmitter changes its point of attachment to the common communication network, being used to transmit the voice IP packets between them. A change of the mobile terminal's point of attachment is henceforth a vertical handover.
c) The codecs need be available to the receiver and the transmitter during the complete voice call. When the receiver or the transmitter failed to provide a common codec, a codec switch may occur during the voice call.

In any of the events afore listed, a codec change occurs during the voice call. This codec change may cause audible impairments that disturb users and affects the voice call quality. Such impairments can be quantified by elaborated user perception tests and network activity analysis. As well, the impact of the impairments caused by codec switching can be reduced using specific methods for codec switching or changeover.

One of the preferred aspect of the present invention is aimed to the depicted scenario, following one of the aforementioned events, the need to replace the compression algorithm used during a voice call, affecting the voice quality and in consequence the user experience. The present invention describes an apparatus, a method and system to reduce the audible impairments when switching codecs in an active voice call.

In comparison to US 2007/0195749, one of the aspects of the present invention is to initiate a codec switch when one of the following events occur: (1) unexpected drastic changes in network conditions, not only packet loss; (2) drastic changes in network conditions due to the fact that the mobile terminal changes the point of attachment to the Internet, performing a vertical handover; (3) due to unavailable codecs and/or due to a vertical handover when the mobile terminal roams across different networks.

Whereas US-B1-7 307 980 uses a network component to connect both receiver and transmitter and perform codec/decoder changes, the present invention does not comprise any middle element and it is the transmitter and receiver themselves which coordinate to execute codec/encoder changes. Further, the present invention is intrinsic to the initiation of codec changeover process which according to US-B1-7 307 980 is limited to the network conditions. Moreover, additional technical processes in the codec switching algorithm may be implemented by the present invention, in order to prevent quality disturbance during codec/decoder changes.

In comparison with US-A1-2007/0104185, the present invention provides an aspect to overcome the limitation of the system and method which observes only packet loss as a decision parameter. The present invention may observe other parameters in addition such as network operator restrictions, and drastic changes in other network characteristics. Furthermore, the present invention enables masking of codec adaptation instances and can be general used with various codec types while US-A1- 2007/0104185 does not consider codec synchronization during codec switching.

In comparison with US-B2-7 020 263 which relates to a method performed by an agent that resides in the network and monitors the communication platform used to connect the sender and receiver during the voice call, one of the aspects of the present invention is aimed to a significant improvement of the apparatus and the method as well as of the system, in order to facilitate a mobile terminal to perform the monitoring of the network conditions and to communicate the events related to codec replacement directly to the receiver. One of the aspects of the present invention is to avoid the triangulation of information between receiver-agent-transmitter, in order to increase the reliability and to avoid points of failure.

In comparison to US-B1-6735175, one of the aspects of the present invention is do not implement an additional Media Gateway and avoid user intervention for codec changeover.

In comparison to EP-A2-1827030, the invention may be intended for packet based telephony and it does not require program specific information to select the proper codec.

Although some codec adaptation measures already exist, they do not consider the audible side-effects of codec changeover process, like play-out interruption. From here, arise a need for an efficient system that allows for seamlessly changing the speech codec, i.e. without interrupting the audio stream. In contrast to prior art mentioned afore, the apparatus of the present invention is focussed on user experience and enables to mask side-effects of codec changeover moment in an application. In this way, seamless codec changeovers may be used to meet occurring requirements and may reduce user perception of apparatus adaptation.

These and other aspects of the invention will be apparent from the earlier stated with reference to the embodiments described hereinafter.

### BRIEF DESCRIPTION OF THE FIGURES

It is shown in
- Fig. 1: A schematic view of a basic communication system between two terminals that support codec changeover,

- Fig. 2: Flow chart illustrating the main steps in the process of codec changeover
- Fig. 3: Schematic block diagram of an apparatus for use in a voice over IP system,
- Fig. 4: Schematic block diagram of the preferred embodiment of the invention,
- Fig. 5: Schematic view of a timing diagram of a preferred embodiment of the invention, and
- Fig. 6: Schematic flowchart of a preferred embodiment.

### DETAILED DESCRIPTION OF THE INVENTION

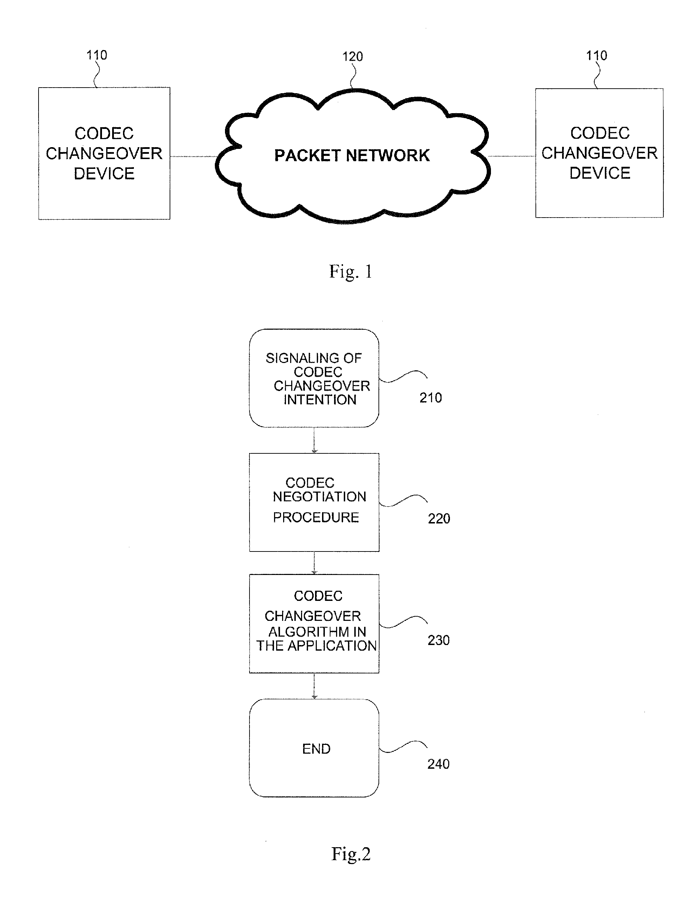

A preferred embodiment of the present invention is shown in Fig. 1. The codec changeover apparatuses 110 provide voice communication over the packet based network 120. According to the network restriction or events, like vertical handover, degradation of link conditions, codec requirements in the packet network 120, the codec changeover apparatuses 110 may request for codec change during an active voice call. This request is directly initiated by one of the end apparatus 110.

The general steps of codec changeover process are shown in Fig. 2. The apparatus signals the need of codec changeover to the other end 210. This step initiates a negotiation of a codec to be applied consecutively 220. After both codec changeover apparatuses agree on one common codec and start streaming the data using the new format, the application runs the internal codec changeover algorithm to reduce the audible effects of codec changeover 230. After the process 230 is completed, the seamless codec changeover is finished 240.

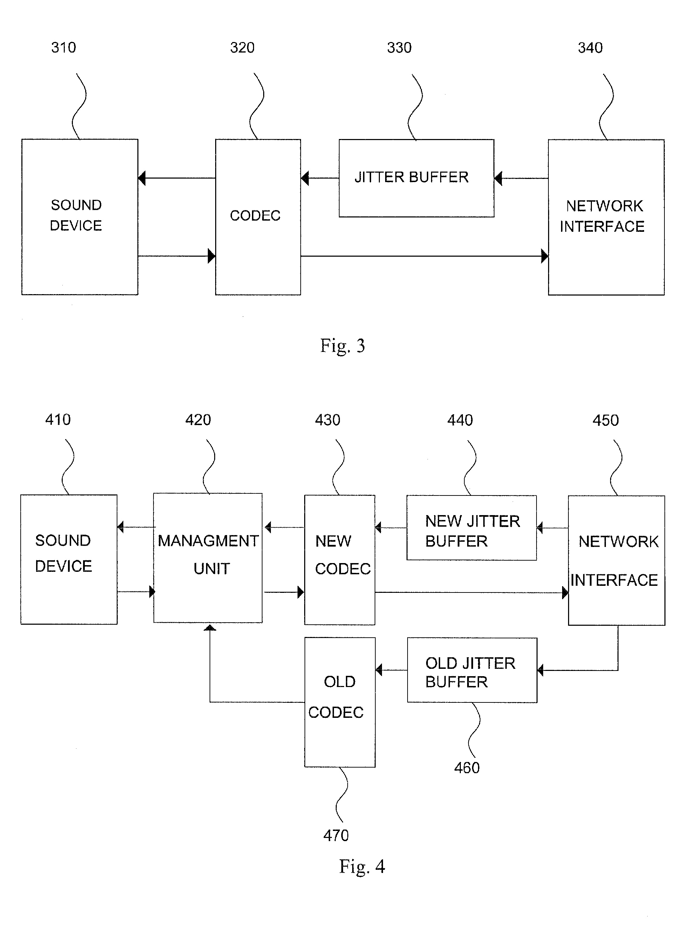

The application related system performs a seamless codec changeover process which may be presented based on the typical structure of the current voice applications, depicted in Fig.3. The voice data processed by the application flows between sound apparatus 310, codec 320, jitter buffer 330 and network apparatus 340. One codec is bi-directionally connected to the sound card and network interface including intermediate jitter buffer. Out of here arise the drawback to provide seamless codec changeover, because the particular elements interact during a voice call and can not be exchanged without considering the consequences. (1) Codec may be synchronized to the jitter buffer instance, (2) the appropriate codec may be applied to decode voice, and (3) the outgoing data may be compressed with appropriate codec.

The jitter buffer is preferable for the present invention. The jitter buffer entity allows balancing the time difference between arrivals of particular voice packets. Some amount of packets may be buffered before it is forwarded to the consecutive entity, i.e. codec. Therefore, a time consuming pre-buffering process to fill a buffer and provide enough range to balance the delay variation is preferred. As well, the data, i.e. voice packets from a jitter buffer should be entirely played-out from the buffer at the end of transmission, also using a codec.

The above mentioned drawbacks of the classical voice application structure hinder seamless codec changeover and introduce audible side-off effects of this process. The main issue is the dependency between audio codec and the jitter buffer and their relation in the time. It is not possible to destruct a codec, until the voice data of the particular codec has not completely been decoded. Vice versa, proper codec must be active, when corresponding data is still buffered. Violation of this dependency results in application related play-out disruptions.

To cope with this problem a codec changeover method and system is included in the present invention and allows reduction of aforementioned issues of codec changeover process. The design is focused on following points:
a) During one session, the application should not discard packets containing voice compressed by different codecs. The application may be enabled to serve more then one codec during the codec changeover phase. The differentiation of packet content may be done by tagging of the particular packets.
b) Even if application is able to decode different compression schemes in parallel, it must be preserved that only one codec, the consecutive newest one, is applied for the encoding of the data.
c) The content of the jitter buffer must be completely played-out before deleting. This prevents losing already buffered data, and allows to by-pass the pre-buffering time of the next jitter buffer.

To comply with the aforementioned assumptions, the present invention applies codec changeover system presented in Fig. 4. During codec changeover, the sound device 410 is connected to a management unit 420 that, in turn, is connected to codec instances. A first and a second codec, i.e. an old one 470 and a new one 430, exist in parallel. Every of them possess own jitter buffer, an old one 460 and a new one 440. Both jitter buffers are connected to the network interface 450 that routes the incoming voice packets to the appropriate entities. Thereby, only the new codec is directly connected in the outgoing direction with the network interface, and is able to send data. The system from Fig.4 enables to fulfil the above mentioned requirements for seamless codec switching.

The role of the old codec and the new codec will change with the next codec changeover. Thus the first codec will become the new codec and the second codec will become the old codec.

There may be more than two codec and respective jitter buffers. Depending on the negotiated compression scheme one of the plurality codec will act as the new codec, whereas another of the plurality of codec continues decoding according to the old compression scheme.

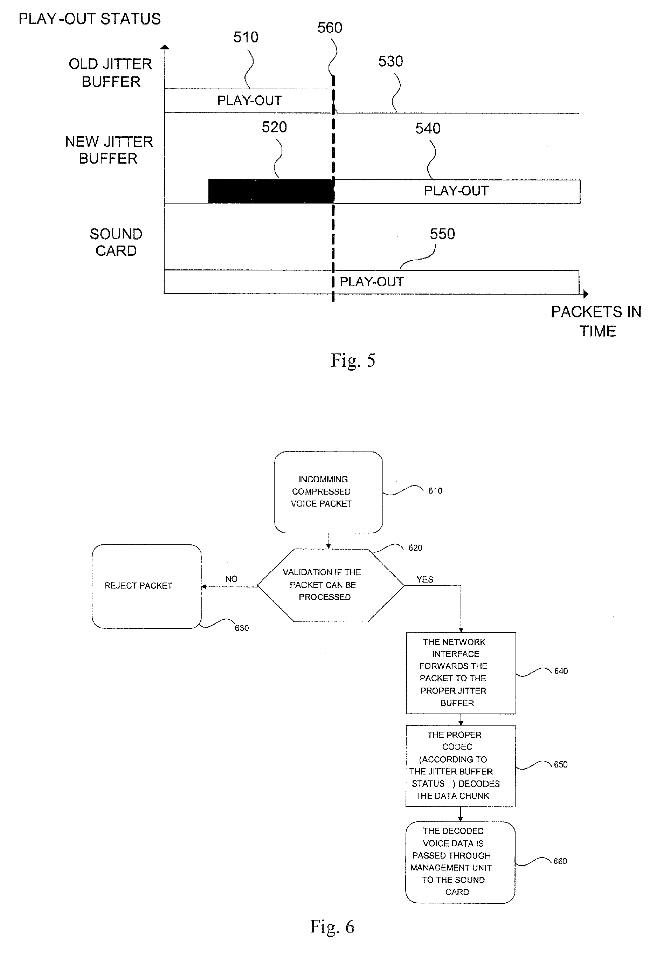

The application behaviour during codec changeover and treatment of particular voice packets is shown in Fig. 6. The incoming packet with compressed voice 610 is validated if it can be processed in the application 620. If no, the packet is rejected 630. If yes, the packet is routed by the network interface to the proper jitter buffer 640. According to the play-out status of the involved jitter buffers, one of the codecs decode a data chunk 650, which is then passed through the management unit to the sound device 660.

The play-out timeline and interaction of the jitter buffers and the sound card is depicted in Fig 5. Through synchronization of separated codecs and related jitter buffers, the play-out of the sound card 550 is continual, even if it is switched 560 to the new codec. Play-out synchronization of the system elements enables to play-out total content of the old jitter buffer 510, and pre-buffer the content of the new jitter buffer in parallel 520. After the old jitter buffer is empty 530, it is switched to the new codec and jitter buffer 540. Because the pre-buffering phase of the new jitter buffer was masked by playing-out the total content of the old jitter buffer, the voice output from the sound device to the user stays continuous.

The above described apparatus, method and system of codec switching enables synchronization of codecs in real time during codec changeover and allows reduction of audible play-out artefacts. This improves user experience when an apparatus adapts to the occurring network conditions.

The present invention was included in work on user perception of audio bandwidth fluctuations during ongoing VoIP calls. The embodiment of the invention is based on PJPROJECT 0.5.10.3 (B. Prijono. Open Source SIP Stack and Media Stack for Presence, Instant Messaging, and Multimedia Communication. http://pjsip.org/) framework. The implementation is divided in a session initiation protocol and/or session description protocol (hereinafter referred to as SIP/SDP protocol) based mechanism for codec negotiation, parallel media stream establishment, and RTP packet filtering.

The integrated in PJPROJECT framework SIP and SDP protocol implementation is used to negotiate the codec when a changeover is requested. While SIP protocol serves as a mean signalling protocol and carrier for SDP, the SDP protocol allows detailed negotiation of media stream parameters, here codec. The negotiation procedure itself complies with RFC 3264. For example, a first apparatus requesting for codec change initiates the SIP handshake and offers a new codec by sending SIP INVITE message. If the proposed codec is supported by the second apparatus, the codec selection is confirmed with SIP 200 OK. The SIP handshake is then completed with an acknowledgment (ACK) issued by the first apparatus.

Brief description of the media flow in the PJPROJECT precedes presentation of implementation of parallel media stream establishment and of RTP filtering. The application is build modular. The sound device is connected to a Sound Device Port in the application. This port is connected to a Conference Bridge. The Conference Bridge provides mixing and routing capabilities for audio signals. It interconnects the Sound Device Port with Media Streams responsible for voice transmission. Each Media Stream consists of a single codec instance, a jitter buffer, and a real time transport protocol unit (a RTP protocol unit, hereinafter referred to as RTP Session) that provides RTP packetization. The RTP Session is connected to a Media Transport unit that sends and receives RTP packets to/from the network interface.

The seamless codec changeover solution realizes the make-before-break strategy. To serve both codecs involved in the changeover process, the application creates a new Media Stream before the old one is destructed. Only the new Media Stream is directly connected to the Media Transport unit and is capable of network connectivity. Both of the Media Streams are bidirectional attached to the Conference Bridge. The old Media Steam is connected to the Media Transport through the RTP Session of the new Media Stream. So, the old Media Stream can not send but can receive RTP packets forwarded by the new Media Stream.

The RTP Session has been modified, because this entity inherently rejects packets with incorrect RTP header information. This behaviour appears when changes of payload type information and abrupt changes of RTP packet sequence number in the RTP header occur. After the modification the RTP Session can send the RTP packets to the proper Media Streams.

The synchronization of the particular codecs with the sound device utilizes the codec output sent to the Conference Bridge. This output, in turn, depends on the status of the respective jitter buffer. Thus, as soon as the old jitter buffer is empty and outputs empty frames, it is switched to the new Media Stream and the old one is being destroyed.

The above presented implementation fulfils the invention requirements and so allows reduction of audible side-effects of real time codec changeover during an active voice call.

The present invention has now been described with reference to several embodiments thereof. The foregoing detailed description and examples have been given for clarity of understanding only. No unnecessary limitations are to be understood therefore. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the apparatuses, methods and systems described herein.

## Claims

1. An apparatus for providing data communication over a packet based network comprising:
a network interface (450) being connectable to the packet based network,
at least two codec means (430, 470) being arranged in parallel and being connected to said network interface (450), wherein a first codec means (470) comprises a first buffer (460) and a second codec means (430) comprises a second buffer (440),
a management unit (420) being connected to said codec means (430, 470) and a sound device (410);
wherein when a changeover signal is issued, said first codec means (470) continuous to decode an input data packet being passed through by said first buffer (460), and said second codec means (430) initiates an encoding process of an output data packet being received from the sound device (410) and directly transmits the encoded output data packet to the network interface (450).

2. Apparatus according claim 1, wherein during a codec changeover said first codec means (470) continuous to decode said input data packet, until receipt of a buffer status signal when the first buffer (460) is empty.

3. Apparatus according to any one of claims 1 to 2, wherein the network interface (450) comprises a type detection means for detecting the type of input data packet and forwarding the input data packet to one of said codec means suitable for processing said type of input data packet.

4. Apparatus according to any one of claims 1 to 3, wherein the network interface comprises an integrity detection means for detecting integrity of said input data packet by determining a packet number of said input data packet; wherein said input data packet is rejected when said packet number has a predetermined distance from the packet number of a previous input data packet.

5. Apparatus according to any one of claims 1 to 4, wherein each of said codec means is capable to encode/decode a predetermined encoding/decoding scheme which is different from the predetermined encoding/decoding schemes of the other codec means.

6. Apparatus according to any one of claims 1 to 5, wherein the input/output data packet is a voice packet.

7. Apparatus according to any one of claims 3 to 6, wherein the type of input data packet is a voice packet encoded according to a predetermined encoding scheme.

8. A system for negotiating data communication over a packet based network comprising a first apparatus being connected to said packet based network and a second apparatus being connected to said packet based network, said first and second apparatus preferably comprising the features of any one of claims 1 to 7,
wherein the first apparatus requesting a codec changeover initiates a handshake and provides a new codec by sending session initiation protocol message;
wherein the second apparatus confirms the selection of said new codec if it is supported by the second apparatus; and
wherein the first apparatus completes said handshake with an acknowledgment.

9. A method for processing data in a packet based network comprising the following steps:
receiving and transmitting an input/output data packet via a network interface (450),
providing the received data to at least two codec means (430, 470) wherein the first codec means (470) comprises a first buffer (460) and the second codec means (430) comprises a second buffer (440),
forwarding/receiving data from the codec means (430, 470) to a management unit (420) being connected to a sound device (410);
wherein when a changeover signal is issued, said first codec means (470) continuous to decode the input data packet being passed through by said first buffer (460), and said second codec means (430) initiates an encoding process of the output data packet being received from the sound device (410) and directly transmits the encoded output data packet to the network interface (450).

10. Method according to claim 9, wherein said management unit sends said changeover signal between a receiver and a transmitter to initiate the codec changeover in the presence of at least one of the following situations when a terminal changes networks:
codec is not available in the packet based network, and actual codec cannot cope with changes in the network conditions.

11. A method for negotiating data communication over a packet based network comprising:
initiating a handshake by a first apparatus requesting codec changeover;
providing a new codec by sending a message from said first apparatus;
confirming the selection of said first codec if said codec is supported by a second apparatus; and
completing said handshake with an acknowledgment.

12. Method according to claim 11, wherein said negotiation procedure is complied with RFC standard in a frame work preferably based on session initiation protocol and session description protocol.

13. Method for determining data bandwidth fluctuation during data processing in a packet based network comprising steps of initiating said negotiation procedure according claim 11 or 12, establishing a parallelism of media stream and filtering the packets of real time transport protocol.
